(19) Europäisches Patentamt
European Patent Office
Office européen des brevets

(11) EP 0 582 337 B1

## (12) EUROPEAN PATENT SPECIFICATION

(45) Date of publication and mention
of the grant of the patent:
**13.03.1996 Bulletin 1996/11**

(51) Int. Cl.⁶: $B01D\ 53/34$, $C01B\ 17/05$, $B01D\ 53/14$

(21) Application number: **93202192.6**

(22) Date of filing: **23.07.1993**

(54) **Process of removing hydrogen sulphide from a gas mixture**

Verfahren zum Entfernen von Schwefelwasserstoff aus einem Gasgemisch

Procédé d'éliminition de l'hydrogène sulfuré d'un mélange gazeux

(84) Designated Contracting States:
**BE DE FR GB NL**

(30) Priority: **27.07.1992 EP 92202316**

(43) Date of publication of application:
**09.02.1994 Bulletin 1994/06**

(73) Proprietor: **SHELL INTERNATIONALE RESEARCH MAATSCHAPPIJ B.V.**
**NL-2596 HR Den Haag (NL)**

(72) Inventor: **Bowman, David Frederick**
**NL-2596 HR The Hague (NL)**

(56) References cited:
**US-A- 3 728 440**        **US-A- 4 534 955**
**US-A- 4 853 192**        **US-A- 5 139 753**

## Description

The present invention relates to a process of removing hydrogen sulphide from a gas mixture including hydrogen sulphide comprising contacting the gas mixture in a contactor at a temperature below the melting point of sulphur with an aqueous reactant solution including a coordination complex of Fe(III) with a chelating agent to produce a purified gas stream having a reduced hydrogen sulphide content and a spent aqueous solution containing solid sulphur and having an increased content of coordination complex of Fe(II) with the chelating agent, and regenerating the spent aqueous reactant solution to obtain regenerated aqueous reactant solution.

Such a process is disclosed in USA patent specification No. 4 871 520. In the contacting stage hydrogen sulphide is oxidized in the contactor to elemental sulphur by Fe(III) which in turn is reduced to Fe(II). The oxidation step will take place along the following reaction:

$$2\ Fe(III)(L) + H_2S \rightarrow 2\ Fe(II)(L) + S + 2\ H^+$$

To regenerate the spent aqueous reactant solution the solution is contacted with a free oxygen-containing gas so that Fe(II) is oxidized to Fe(III) to produce a regenerated aqueous reactant solution which can be used in the contacting stage. The regeneration is believed to take place according to the following reactions:

$$2\ Fe(II)(L) + O_2 + 2\ H^+ \rightarrow 2\ Fe(III)(L) + H_2O_2$$

$$Fe(II)(L) + H_2O_2 \rightarrow Fe(III)(L) + \cdot OH + OH^-$$

$$Fe(II)(L) + \cdot OH \rightarrow Fe(III)(L) + OH^-$$

Degradation of the chelating agent (L) is believed to take place along the following reaction:

$$L + \cdot OH \rightarrow degradation\ products$$

In the above reaction equations ·OH is a free hydroxyl radical, Fe(III)(L) is the coordination complex of Fe(III) with a chelating agent L, and Fe(II)(L) is the coordination complex of Fe(II) with a chelating agent L.

In European patent application publication No. 215 505 it is proposed to maintain a certain concentration of Fe(II) in the regenerated aqueous reactant solution, larger than about 0.15 mol Fe(II) per mol Fe in order to reduce degradation of the chelating agent, suitably the amount is larger than about 0.15 mol Fe(II) per mol Fe.

European patent specification No. 186 235 discloses regeneration of spent aqueous solution wherein the solution and free oxygen-containing gas are forced to flow in plug flow co-currently through a contact vessel, so that in the direction of flow through the contact vessel the concentration of ·OH simultaneously decreases with the concentration of Fe(II) which is oxidized to Fe(III).

It appears in practice that even when attempting to operate in plug flow some backmixing will occur so that the contact vessel approximates an ideal mixer wherein the composition of the fluid in the contact vessel is substantially equal to the composition of the fluid leaving the vessel. Degradation of the chelating agent can then only be avoided if the conversion to Fe(III) is not complete.

To reduce backmixing the contact vessel can be provided with packing, or alternatively a long, slender contact vessel can be used. These solutions, however, are undesirable since the packing is susceptible to fouling and the use of packing will give rise to a large pressure drop. And the use of a long, slender contact vessel will also give rise to a large pressure drop.

It is an object of the present invention to provide a process wherein during regeneration degradation of the chelating agent is reduced, and wherein the Fe(II) concentration in the regenerated reactant solution is less than 0.10 mol Fe(II) per mol Fe which corresponds to more than 0.90 mol Fe(III) per mol Fe.

To this end the process of removing hydrogen sulphide from a gas mixture including hydrogen sulphide according to the invention comprises contacting the gas mixture in a contactor at a temperature below the melting point of sulphur with an aqueous reactant solution including a coordination complex of Fe(III) with a chelating agent to produce a purified gas stream having a reduced hydrogen sulphide content and a spent aqueous solution containing solid sulphur and having an increased content of coordination complex of Fe(II) with the chelating agent, and regenerating the spent aqueous reactant solution to obtain regenerated aqueous reactant solution, wherein regenerating the spent aqueous reactant solution includes contacting in a first contact vessel the spent aqueous reactant solution co-currently with free-oxygen containing gas to produce partly regenerated aqueous reactant solution and contacting in a second contact vessel partly regenerated aqueous reactant solution counter-currently with free oxygen-containing gas to produce regenerated aqueous reactant solution which is removed from the lower part of the second contact vessel.

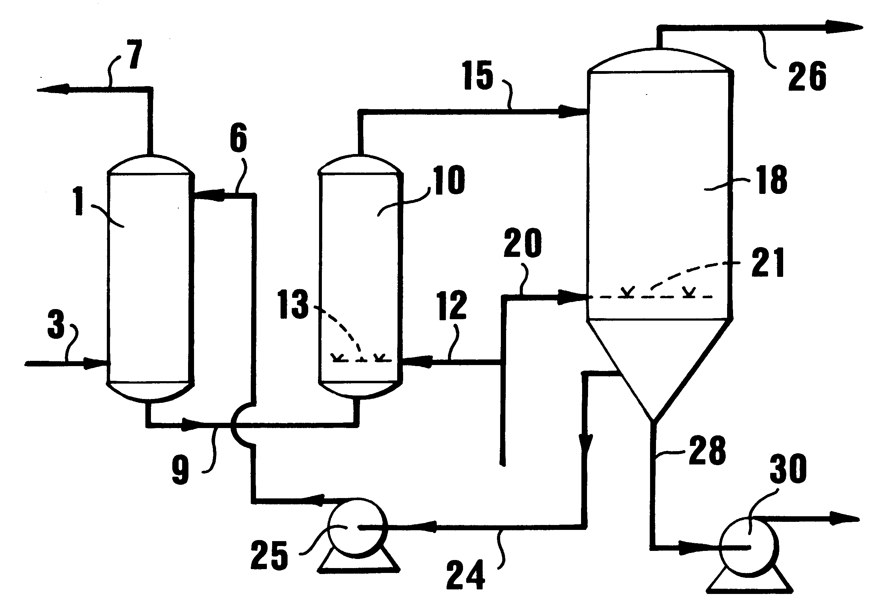

The invention will now be described in more detail by way of example with reference to the accompanying drawing showing a line-up for the process according to the present invention.

A hydrogen sulphide containing gas mixture is supplied to a contactor 1 through feed conduit 3. In contactor 1 the gas mixture is contacted at a temperature below the melting point of sulphur with an aqueous reactant solution including a coordination complex of Fe(III) with a chelating agent which is supplied to contactor 1 through conduit 6. In the contactor 1 hydrogen sulphide is oxidized to elemental sulphur by Fe(III) which in turn is reduced to Fe(II). A purified gas stream having a reduced hydrogen sulphide content is removed from contactor 1 through conduit 7 and spent aqueous solution containing solid sulphur and having an increased content of coordination complex of Fe(II) with the chelating agent is removed through conduit 9.

The hydrogen sulphide containing gas mixture can be any gas mixture containing hydrogen sulphide, examples are natural gas and synthesis gas produced from the partial combustion of coal, hydrocarbon oil or natural gas. The concentration of hydrogen sulphide can be in the range of from 0.05 to 50% by volume.

The aqueous reactant solution contains in the range of from 2 and 15 mol of Fe(III) per mol of hydrogen sulphide to be removed. The chelating agent is suitably an organic acid, for example nitrilotriacetic acid, ethylenediaminetetraacetic acid or hydroxyethylethylenediaminetriacetic acid. The pH of the reactant solution is suitably in the range of from 4 to 8. The temperature in the contactor 1 range from 10 to 80 °C, the pressures from 0.1 to 15 MPa and the contact time ranges from 1 to 120 s.

In order to regenerate spent aqueous solution, the solution is supplied to a first contact vessel 10. In the first contact vessel spent aqueous solution is contacted co-currently with free-oxygen containing gas in the form of air supplied to the vessel 10 through conduit 12 and distributor 13 arranged in the first contact vessel 10. In the first contact vessel 10 the spent aqueous solution is only partly regenerated, and a mixture of spent air and partly regenerated aqueous reactant solution is supplied through conduit 15 to a second contact vessel 18.

In the second contact vessel 18 partly regenerated aqueous reactant solution is counter-currently contacted with free oxygen-containing gas in the form of air supplied through conduit 20 and distributor 21 arranged in vessel 18. The regeneration of the aqueous reactant solution is completed in the second contact vessel 18, and regenerated aqueous reactant solution which is removed from the lower part of the second contact vessel 18 through conduit 24. The regenerated aqueous solution is pumped by pump 25 to the contactor 1 for re-use.

Spent air from both contact vessels 10 and 18 is removed from the second contact vessel 18 through conduit 26 and a stream which is rich in elemental sulphur is removed through conduit 28 provided with pump 30.

The amount of Fe(II) which is oxidized in the regeneration depends on the contact time and on the amount of free oxygen containing gas wherein the amount of oxygen can be selected to be direct proportional to the amount of hydrogen sulphide in the gas mixture to be treated.

The method of regenerating spent aqueous solution in the process of the present invention facilitates selecting the contact times in the first and second contact vessels, 10 and 18, so that in the first contact vessel 10 the concentration of Fe(II) in the stream leaving the first contact vessel 10 through conduit 15 is between 0.20 and 0.50 mol Fe(II) per mol Fe and the concentration of Fe(II) in the stream leaving the second contact vessel 18 is below 0.10 mol Fe(II) per mol Fe. In practice the minimum concentration of Fe(II) in the stream leaving the second contact vessel 18 is about 0.01 mol Fe(II) per mol Fe.

The regeneration is suitably performed at atmospheric pressure and ambient temperature with air which contains 21% by volume of oxygen. The contact time in the first contact vessel 10 is between 8 and 12 minutes and in the second regeneration vessel 18 the contact time is between 6 and 10 minutes. When required regeneration can be done at higher pressures and temperatures.

The advantage of the regeneration process in the process of the present invention can be explained as follows.

We assume that the concentration of Fe (III) formed from Fe(II) is direct proportional to contact time, which assumption implies that it takes about the same contact time to reduce the concentration of Fe(II) to 0.10 mol Fe(II) per mol Fe in one contact vessel or in two contact vessels, and that the amount of degradation of the chelating agent is direct proportional to contact time as well and that the amount of degradation is inverse proportional to the concentration of Fe(II). In addition we assume that a contact vessel can be considered as an ideal mixer, so that the concentrations of the compounds in the contact vessel equal the concentrations of the compounds leaving the contact vessel.

Let us now take as an example regenerating a spent aqueous solution containing about 0.80 mol Fe(II) per mol of Fe, which is so regenerated that the final concentration of Fe(II) is 0.10 mol per mol Fe, to obtain this final Fe(II)-concentration the total regeneration time is 18 minutes.

In the case that one contact vessel is employed the final concentration of Fe(II) is obtained in this contact vessel. In the case that two contact vessels are employed, this final concentration is reached in two stages: a first stage wherein the concentration of Fe(II) is 0.40 mol per mol Fe (contact time 10 minutes) and a second stage wherein the final concentration is 0.10 mol per mol Fe (contact time 8 minutes). Thus in case one contact vessel is employed there is about 0.10 mol Fe(II) per mol Fe present in the contact vessel for the 18 minutes it takes to oxidize Fe(II), whereas in the case that two contact vessels are employed, in the first contact vessel there is about 0.40 mol Fe(II) per mol Fe during 10 minutes, and only during 8 minutes in the second contact vessel the concentration of Fe(II) is 0.10 mol per mol Fe. Thus the amount of degradation of the chelating agent in the first contact vessel is much smaller than the amount of degradation in the second contact vessel, and the total amount of degradation is much smaller than the amount of degradation in case only one contact vessel had been used.

In the line-up as described with reference to the drawing, gas mixture and aqueous reactant solution are contacted counter-currently in contactor 1. Other gas-liquid contactors can be used as well, examples are a spray column or a co-current contactor or any combination of the contactors.

## Claims

1. Process of removing hydrogen sulphide from a gas mixture including hydrogen sulphide comprising contacting the gas mixture in a contactor at a temperature below the melting point of sulphur with an aqueous reactant solution including a coordination complex of Fe(III) with a chelating agent to produce a purified gas stream having a reduced hydrogen sulphide content and a spent aqueous solution containing solid sulphur and having an increased content of coordination complex of Fe(II) with the chelating agent, and regenerating the spent aqueous reactant solution to obtain regenerated aqueous reactant solution, wherein regenerating the spent aqueous reactant solution includes contacting in a first contact vessel the spent aqueous reactant solution co-currently with free-oxygen containing gas to produce partly regenerated aqueous reactant solution and contacting in a second contact vessel partly regenerated aqueous reactant solution counter-currently with free oxygen-containing gas to produce regenerated aqueous reactant solution which is removed from the lower part of the second contact vessel.

2. Process according to claim 1, further comprising removing a sulphur-rich stream from the lower part of the second contact vessel below the location from which regenerated aqueous reactant solution is removed.

## Patentansprüche

1. Verfahren zur Entfernung von Schwefelwasserstoff aus einem schwefelwasserstoffhaltigen Gasgemisch, bei dem man das Gasgemisch bei einer Temperatur unterhalb des Schmelzpunkts von Schwefel in einem Kontaktor mit einer wäßrigen Reaktandenlösung, die eine Fe(III)-Koordinationsverbindung mit einem Chelatbildner enthält, zur Herstellung eines gereinigten Gasstroms mit einem verringerten Schwefelwasserstoffgehalt sowie einer erschöpften wäßrigen Lösung, die festen Schwefel enthält und einen erhöhten Gehalt an einer Fe(II)-Koordinationsverbindung mit dem Chelatbildner aufweist, in Berührung bringt und die erschöpfte wäßrige Reaktandenlösung zur Erzeugung regenerierter wäßriger Reaktandenlösung regeneriert, wobei das Regenerieren der erschöpften wäßrigen Reaktandenlösung darin besteht, daß man zur Herstellung teilweise regenerierter wäßriger Reaktandenlösung in einem ersten Kontaktbehälter die erschöpfte wäßrige Reaktandenlösung im Gleichstrom mit freien Sauerstoff enthaltendem Gas in Berührung bringt und zur Herstellung regenerierter wäßriger Reaktandenlösung, welche aus dem unteren Teil des zweiten Kontaktbehälters abgezogen wird, in einem zweiten Kontaktbehälter die teilweise regenerierte wäßrige Reaktandenlösung im Gegenstrom mit freien Sauerstoff enthaltendem Gas in Berührung bringt.

2. Verfahren nach Anspruch 1, bei dem man weiter unterhalb der Stelle, an der man die regenerierte wäßrige Reaktandenlösung abzieht, aus dem unteren Teil des zweiten Kontaktbehälters einen schwefelreichen Strom abzieht.

## Revendications

1. Procédé d'élimination du sulfure d'hydrogène d'un mélange de gaz contenant du sulfure d'hydrogène, qui comprend la mise en contact du mélange de gaz dans un appareil de mise en contact à une température inférieure au point de fusion du soufre avec une solution de réaction aqueuse contenant un complexe par coordinance de Fe(III) avec un agent chélateur, de manière à produire un courant de gaz épuré à teneur en sulfure d'hydrogène réduite et une solution aqueuse épuisée contenant du soufre solide et possédant une teneur accrue en complexe par coordinance de Fe(II) avec l'agent chélateur, et la régénération de la solution de réaction aqueuse épuisée pour obtenir une solution de réaction aqueuse régénérée, où la régénération de la solution de réaction aqueuse épuisée comprend la mise en contact, dans un premier récipient de mise en contact, de la solution de réaction aqueuse épuisée en équicourant avec un gaz contenant de l'oxygène libre, de manière à produire une solution de réaction aqueuse partiellement régénérée et la mise en contact, dans un second récipient de mise en contact, de la solution de réaction aqueuse partiellement régénérée en contre-courant avec du gaz contenant de l'oxygène libre pour produire une solution de réaction aqueuse régénérée qui est prélevée à la partie inférieure du second récipient de mise en contact.

2. Procédé suivant la revendication 1, caractérisé en ce qu'il comprend, en outre, le prélèvement d'un courant riche en soufre à la partie inférieure du second récipient de mise en contact en dessous de l'endroit à partir duquel on prélève la solution de réaction aqueuse régénérée.

26 18 21 30 28 15 20 10 12 24 13 25 6 9 7 1 3